# EUROPÄISCHE PATENTSCHRIFT

(11) **EP 0 913 534 B1**
(45) Veröffentlichungstag und Bekanntmachung des Hinweises auf die Patenterteilung: **25.02.2004**
(21) Anmeldenummer: 98119514.2
(22) Anmeldetag: 15.10.1998
(51) Int. Cl.: E03F 5/02, F16L 37/00, F16L 41/08, F16L 47/00

(54) **Spül- und Kontroll-Schacht für Flüssigkeitsleitungen und Schacht-Abschnitt hierfür**
Manhole for fluid conduits and manhole section therefor
Regard pour des canalisations de fluide et section de regard correspondant

(30) Priorität: 30.10.1997 DE 19747863
(43) Veröffentlichungstag der Anmeldung: 06.05.1999
(73) Patentinhaber: Hegler, Ralph-Peter, Dr.-Ing., 97688 Bad Kissingen (DE)
(72) Erfinder: Hegler, Ralph-Peter, Dr.-Ing., 97688 Bad Kissingen (DE)
(74) Vertreter: Rau, Manfred, Dr. Dipl.-Ing.

(56) Entgegenhaltungen:
- EP-A- 0 097 392
- GB-A- 2 217 744
- US-A- 4 286 808

## Beschreibung

Die Erfindung betrifft einen Spül- und Kontroll-Schacht nach dem Oberbegriff des Anspruches 1 und einen Schacht-Abschnitt hierfür nach dem Oberbegriff des Anspruches 15.

Ein Spül- und Kontroll-Schacht der gattungsgemäßen Art ist durch offenkundige Vorbenutzung bekannt. Der Schacht-Abschnitt ist aus einem handelsüblichen Verbundrohr hergestellt, das ein glattes, zylindrisches Innenrohr und ein mit einer Wellung versehenes Außenrohr aufweist. In dieses Verbundrohr sind Öffnungen eingeschnitten, in die von innen her Anschluß-Stutzen eingesetzt und mit dem Verbundrohr verklebt sind. Dieser Spül- und Kontroll-Schacht ist einfach und kostengünstig herstellbar, kann aber nur aus PVC (Polyvinylchlorid) hergestellt werden, da die Anschluß-Stutzen auf der Innenseite des Innenrohres mit diesem verklebt werden müssen.

Aus dem Prospekt 1.07.96.50 HT "opti-drän-System" der Fränkische Rohrwerke Gebr. Kirchner GmbH + Co ist ein Spül- und Kontroll-Schacht bekannt, dessen Schacht-Abschnitt aus einem einfachen Wellrohr aus PVC-U besteht, an dem in vorgegebenen Abständen Anschlüsse angeformt sind. In diese Anschlüsse werden Öffnungen geschnitten, in die von innen Anschluß-Stutzen eingesetzt werden, die angeklebt bzw. eingeschweißt werden. Diese bekannte Lösung weist den Nachteil auf, daß der Spül- und Kontroll-Schacht wegen der inneren Wellung des Schacht-Abschnitts nur schwer zu reinigen ist. Der Schacht ist nicht sehr stabil, da er axial deformierbar ist. Die Marke "opti-drän" ist eine registrierte Marke der Fränkische Rohrwerke Gebr. Kirchner GmbH + Co.

Aus der GB 2 217 744 A ist ein Spül- und Kontroll-Schacht bekannt, der einen aus einem einfachen Wellrohr gebildeten Schacht-Abschnitt aufweist, in dem jeweils im axialen Abstand voneinander und über den Umfang verteilt Öffnungen mit Kreisquerschnitt angebracht sind. In die diese Öffnungen umgebende Wand des Wellrohres sind kurze Anschluß-Sockel eingeklebt. Diese Ausgestaltung weist die zuvor schon angesprochenen Nachteile auf.

Aus der EP 0 097 392 A2 ist ein Spül- und Kontroll-Schacht bekannt, der im Wesentlichen aus einem glattwandigen Rohr gebildet ist. In die Rohrwand sind sich in Längsrichtung des Rohres erstreckende etwa elliptische Öffnungen eingeschnitten, deren Begrenzungsränder durch Warmverformung zu einem Randsteg verformt sind. Auf letzteren wird ein kastenartig ausgebildeter Anschluß-Sockel mit einem zylinderischen Anschluß-Stutzen aufgesetzt. Dass den Spül- und Kontroll-Schacht bildende glattwandige Rohr ist zwar leicht zu reinigen; weist aber bei einem mit einem Verbundrohr vergleichbaren Einsatz von Material nur eine geringe Stabilität auf. Aus der EP 0 358 857 B1 ist ein Spül- und Kontroll-Schacht bekannt, dessen Schacht-Abschnitt aus einem einfachen Wellrohr besteht, das in seinem Fußbereich mit einem besonders ausgestalteten Boden verschlossen wird.

Der Erfindung liegt die Aufgabe zugrunde, einen Spül- und Kontroll-Schacht der gattungsgemäßen Art zu schaffen, der einfach hergestellt werden kann und äußerst stabil ist.

Diese Aufgabe wird erfindungsgemäß mit einem Spül-und Kontrollschacht mit den Merkmalen des Anspruches 1 gelöst. Dadurch, daß der Schacht-Abschnitt als Verbundrohr ausgebildet ist, ist er axial außerordentlich stabil und wegen der Glattwandigkeit des Innenrohres leicht zu reinigen. Durch die Verformung des Außenrohres zu einem Anschlußsockel ist eine einfache und zuverlässige Halterung des jeweiligen Anschluß-Stutzens möglich.

Aus den Unteransprüchen ergeben sich vorteilhafte und z.T. erfinderische Ausgestaltungen der Erfindung. Insbesondere ist die Möglichkeit hervorzuheben, den Anschluß-Stutzen mit dem Anschlußsockel zu verrasten, also in besonders einfacher Weise mit letzterem fest und im Grunde genommen unlösbar zu verbinden. Dies wiederum ermöglicht den Einsatz von Kunststoffen, die nicht oder nur schwer verschweißbar oder verklebbar sind.

Weiterhin ist besonders hervorzuheben die vorteilhafte Weiterbildung nach den Ansprüchen 12 bis 14. Hierdurch wird ermöglicht, daß für die Anschlußstutzen keine eigenen Formwerkzeuge hergestellt werden müssen, was insbesondere bei großen Durchmessern der Anschlußstutzen von großer wirtschaftlicher Bedeutung ist. Vielmehr können hierbei die Anschlußstutzen während der Herstellung der an die Anschlußstutzen anzuschließenden Rohre, d.h. gemeinsam mit diesen, hergestellt werden. Wenn diese anzuschließenden Rohre ohnehin mit glattwandigen, also nicht gewellten Abschnitten hergestellt werden, die entweder als sogenanntes Spitzende dienen oder die durch Aufweiten zu Muffen verformt werden, dann brauchen nur entsprechende Rohrabschnitte aus dem Verbundrohr herausgeschnitten zu werden und können als Anschlußstutzen eingesetzt werden. Auch wenn dies nicht der Fall ist, kann durch einen geringfügigen Umbau der entsprechenden Vorrichtung, d.h. durch entsprechenden Einsatz von ein oder zwei Kokillen jeweils abschnittsweise anstelle eines gewellten Rohres ein glattwandiger Zylinderabschnitt erzeugt werden.

Weitere Merkmale, Vorteile und Einzelheiten der Erfindung ergeben sich aus der nachfolgenden Beschreibung von Ausführungsbeispielen der Erfindung anhand der Zeichnung. Es zeigt:
- Fig. 1: eine Draufsicht auf ein Verbundrohr, aus dem Schacht-Abschnitte herausschneidbar sind,
- Fig. 2: einen Teil-Querschnitt durch das Verbundrohr gemäß der Schnitt-linie II-II in Fig. 1,
- Fig. 3: einen Teil-Längsschnitt durch das Verbundrohr nach Fig. 1 entsprechend der Schnittlinie III-III in Fig. 1,
- Fig. 4: einen Teil-Querschnitt durch einen Spül- und Kontroll-Schacht mit einem von außen eingesetzten Anschluß-Stutzen,
- Fig. 5: einen Teil-Querschnitt durch einen Spül- und Kontroll-Schacht mit einem von innen eingesetzten Anschluß-Stutzen,
- Fig. 6: einen Querschnitt durch einen Spül- und Kontroll-Schacht mit von außen eingesetztem Anschluß-Stutzen,
- Fig. 7: einen Teilquerschnitt durch einen Anschluß-Stutzen in abgewandel ter Ausführung,
- Fig. 8: einen Teilquerschnitt durch eine Ausführungsform, bei der der Anschluß-Stutzen durch ein Verbundrohr gebildet ist und
- Fig. 9: einen Teilquerschnitt durch einen als Verbundrohr ausgebildeten Anschluß-Stutzen mit einem gegenüber Fig. 8 abgewandelten Anschlag-Ring.

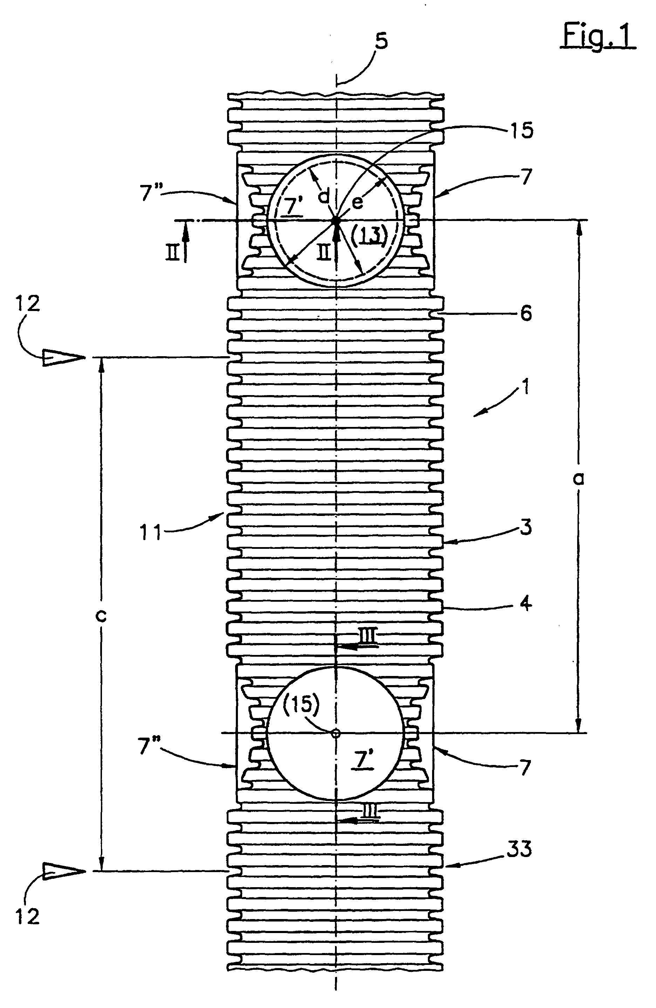

Die Figuren 1 bis 3 zeigen ein endlos hergestelltes, gewelltes Verbundrohr 1, das aus einem glattwandigen, zylindrischen Innenrohr 2 und einem gewellten Außenrohr 3 gebildet ist. Die Wellung 4 des Außenrohres 3 hat den Querschnitt eines sich von der Mittel-Längs-Achse 5 nach außen verjüngenden Trapezes. Das Außenrohr 3 ist jeweils zwischen zwei benachbarten Wellungen 4 in deren Fußbereich 6 mit dem Innenrohr 2 verschweißt. Derartige Verbundrohre 1 sind insoweit allgemein bekannt und in der Praxis weit verbreitet.

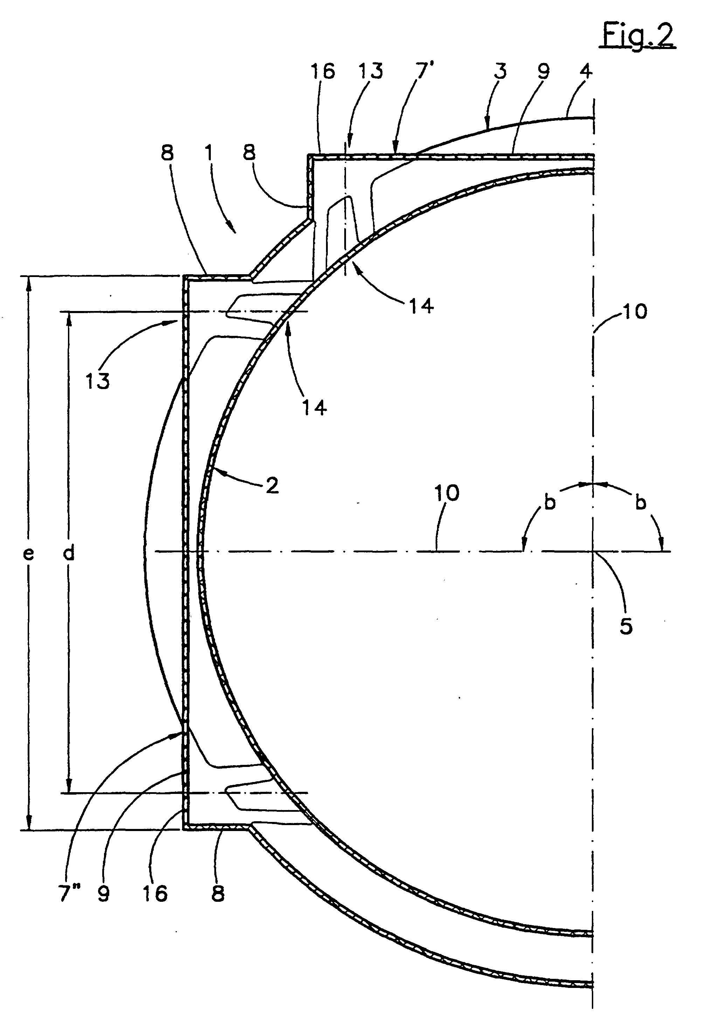

In - bezogen auf die Mittel-Längs-Achse 5 - gleichmäßigen, vorgegebenen Abständen a sind Anschluß-Sockel 7, 7', 7" am Verbundrohr 1 ausgebildet. Diese Anschluß-Sockel 7, 7', 7" sind in der Weise geformt, daß das Außenrohr 3 nicht zu einer Wellung 4 verformt ist, sondern zu einem kurzen, ringzylindrischen Randsteg 8 und einer diesen abschließenden Anschluß-Sockel-Platte 9. Der Anschluß-Sockel 7, 7', 7", d.h. sein Randsteg 8, weist eine Mittel-Achse 10 auf, die die Mittel-Längs-Achse 5 des Verbundrohres 1 senkrecht schneidet. Die Anschluß-Sockel 7, 7', 7" können in bestimmten Anwendungsfällen auch exzentrisch angeordnet sein, d.h. ihre Mittel-Achse 10 schneidet in einem solchen Fall die Mittel-Längs-Achse 5 des Verbundrohres 1 nicht. Wie den Figuren 1 und 2 entnehmbar ist, sind in einer Ebene quer zur Mittel-Längs-Achse 5 drei Anschluß-Sockel 7, 7', 7" ausgebildet, deren Mittel-Achsen 10 unter einem Winkel b von 90° zueinander verlaufen, wie unter anderem Fig. 2 entnehmbar ist. Das Verbundrohr 1 mit den Anschluß-Sockeln 7, 7', 7" kann beispielsweise auf einer Vorrichtung hergestellt werden, wie sie aus der EP 0 563 575 B1 (entsprechend US-PS 5 320 797) und der EP 0 764 516 A2 (entsprechend US-PS 5 693 347) bekannt ist, wobei selbstverständlich die Kokillen der oben geschilderten Form entsprechen müssen.

Aus dem im Prinzip endlosen Verbundrohr werden Schacht-Abschnitte 11 mit den in Fig. 1 angedeuteten Schneideinrichtungen 12 herausgeschnitten, wobei die Länge c der Schacht-Abschnitte 11 dem Abstand a der Anschluß-Sockel 7, 7', 7" entspricht.

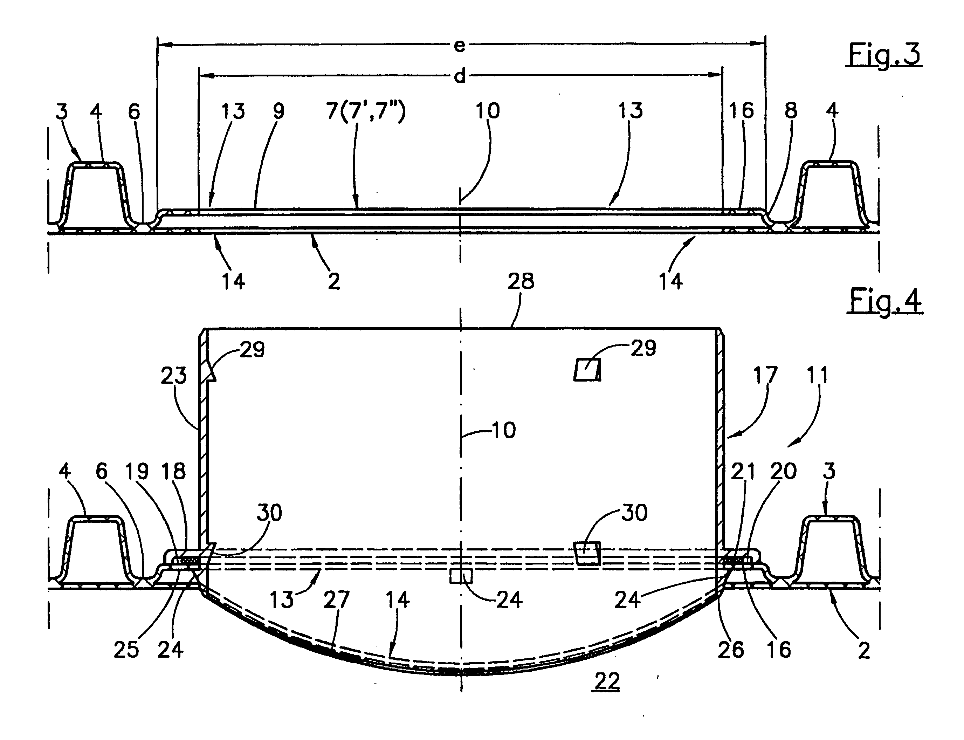

Im Anschluß daran wird in Richtung der jeweiligen Mittel-Achse 10 in die Anschluß-Sockel-Platte 9 eine zur Mittel-Achse 10 konzentrische Öffnung 13 und in den darunterliegenden Bereich des Innenrohres 2 eine gleichgroße, mit der Öffnung 13 fluchtende Öffnung 14 geschnitten. Dies kann beispielsweise mittels eines K-onenbohrers erfolgen. Um diesen einfacher zur Mittel-Achse 10 zentrieren zu können, kann gemäß der Darstellung in Fig. 3 eine die Mittel-Achse 10 markierende Vertiefung 15 in der jeweiligen Anschluß-Sockel-Platte 9 ausgebildet sein. Die Öffnungen 13 und 14 sind unter anderem in den Figuren 1 bis 3 angedeutet. Ihr Durchmesser d ist kleiner als der Durchmesser e der Anschluß-Sockel 7, 7', 7", so daß von der Anschluß-Sockel-Platte 9 jeweils ein äußerer Ringflansch 16 übrigbleibt.

In die Öffnungen 13, 14 wird jeweils ein Anschluß-Stutzen 17 eingesetzt, der - wie Fig. 4 entnehmbar ist - im wesentlichen aus einem zylindrischen Rohrstück besteht, das mit einem radial zur Mittel-Achse 10 vorstehenden Anschlag-Ring 18 versehen ist, der nach der Montage des Anschluß-Stutzens 17 am Anschluß-Sockel 7, 7', 7" gegen die Außenseite 20 des Ringflansches 16 anliegt. Bei der Ausgestaltung nach Fig. 4 weist der Anschlag-Ring 18 eine Ausnehmung 19 auf, in der eine gegen die Außenseite 20 des Ringflansches 16 anliegende Dichtung 21 angeordnet ist, so daß der Innenraum 22 des Schacht-Abschnitts 11 nach außen abgedichtet ist. Eine solche Abdichtung ist notwendig beim Einsatz für Abwasser. Wenn lediglich ein Einsatz für Regenwasser erfolgt, dann ist keine völlige Dichtung notwendig; die Dichtung 21 braucht in diesem Fall nicht eingelegt zu werden. Benachbart zum Anschlag-Ring 18 sind an der Außenfläche 23 des Anschluß-Stutzens 17 widerhakenartige Verriegelungs-Vorsprünge 24 ausgebildet, die die Innenseite 25 des Ringflansches 16 untergreifen, so daß der montierte Anschluß-Stutzen 17 fest mit dem jeweiligen Ringflansch 16 verriegelt ist.

Der dem Innenraum 22 des Schacht-Abschnitts 11 zugewandte Rand 26 des Anschluß-Stutzens 17 entspricht in seiner Kontur dem Verlauf der Öffnung 14, wie Fig. 4 entnehmbar ist. Er ragt geringfügig in den Innenraum 22 hinein und liegt dicht an dem die Öffnung 14 begrenzenden Rand 27 an. Die Verriegelungs-Vorsprünge 24 sind in größeren Abständen voneinander angeordnet; im Ausführungsbeispiel nach Fig. 4 sind beispielsweise in gleichmäßigen Winkelabständen von 90° vier derartige Verriegelungs-Vorsprünge 24 vorgesehen. Die Montage des Anschluß-Stutzens 17 erfolgt im Ausführungsbeispiel nach Fig. 4 also von außen durch einfaches Einstecken des Randes 26 des Anschluß-Stutzens 17 in die Öffnungen 13 und 14.

Im Bereich des äußeren Randes 28 des Anschluß-Stutzens 17 sind nach innen vorspringende Verriegelungs-Vorsprünge 29 ausgebildet, an denen beispielsweise Anschlußrohre oder Reduzierstücke lösbar befestigt werden können, wie es beispielsweise in der DE G 94 08 350.9 U 1 offenbart ist. Etwa im Bereich der Verriegelungs-Vorsprünge 24 sind an der Innenwand des Anschluß-Stutzens 17 Anschläge 30 ausgebildet, gegen die Anschlußrohre oder Reduzierstücke zur Anlage gebracht werden, so daß sie eine definierte Position zum Anschluß-Stutzen 17 haben und insbesondere nicht in das Innenrohr 2 bzw. den Innenraum 22 hineinragen.

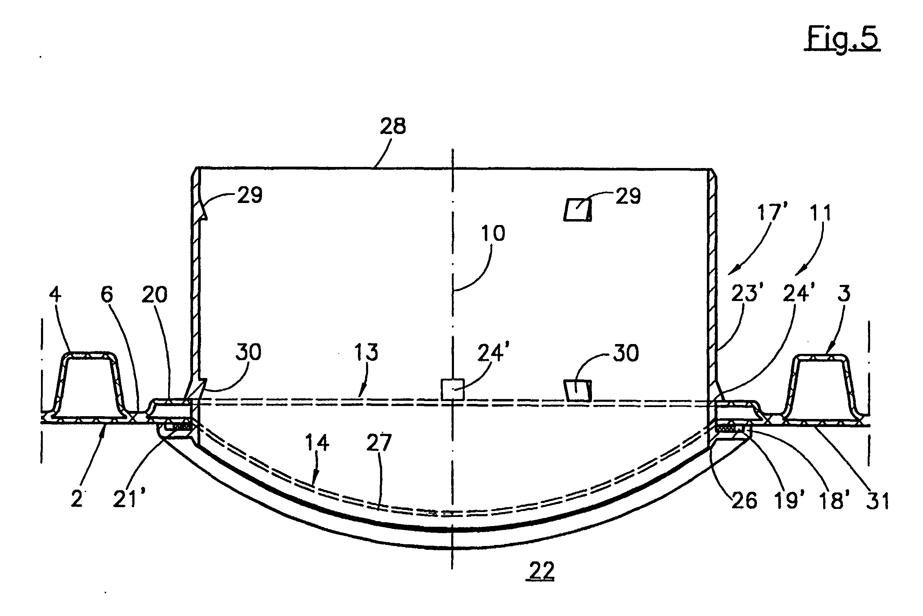

Alternativ kann gemäß der Darstellung in Fig. 5 die Montage eines Anschluß-Stutzens 17' auch vom Innenraum 22 des Schacht-Abschnittes 11 her erfolgen. In diesem Fall ist ein Anschlag-Ring 18' an der Außenfläche 23' des Anschluß-Stutzens 17' ausgebildet, der zur Anlage an der Innenfläche 31 des Innenrohres 2 kommt. Er weist ebenfalls eine Ausnehmung 19' auf, in der eine Dichtung 21' angeordnet ist, die dichtend gegen die Innenfläche 31 des Innenrohres 2 angelegt wird. An der Außenfläche 23' des Anschluß-Stutzens 17' sind Verriegelungs-Vorsprünge 24' ausgebildet, die gegen die Außenseite 20 des Ringflansches 16 anliegen. In diesem Fall ist also der Anschluß-Stutzen 17' zwischen dem Innenrohr 2 und dem aus dem Außenrohr 3 ausgeformten Ringflansch 16 eingespannt. Im übrigen gilt die obige Beschreibung.

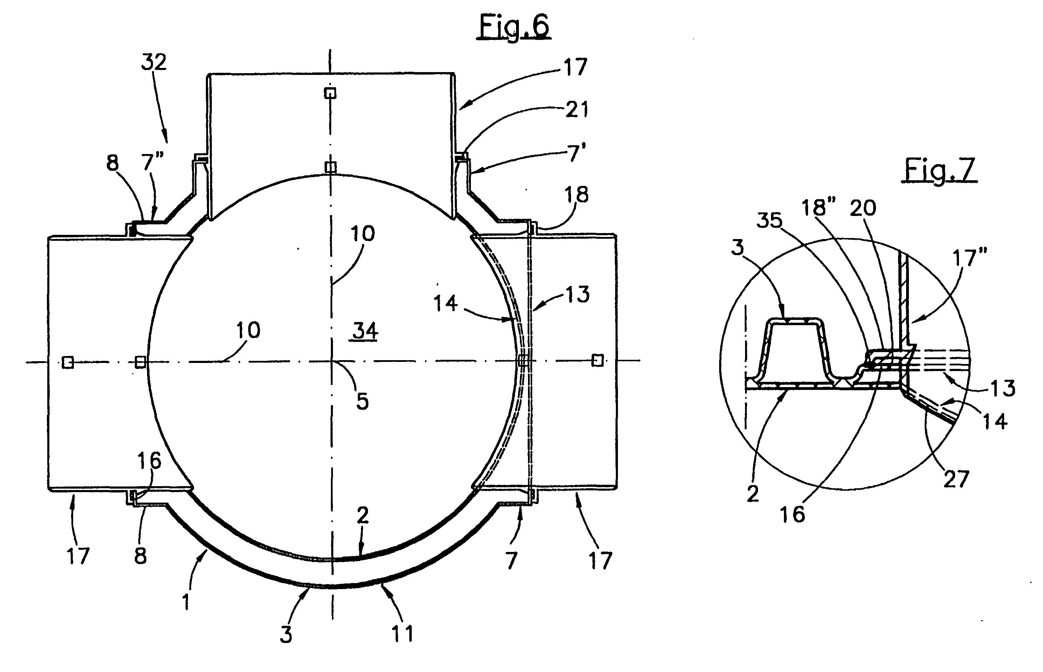

Fig. 6 zeigt einen aus einem Schacht-Abschnitt 11 mit drei Anschluß-Stutzen 17 bestehenden Spül- und Kontroll-Schacht 32, bei dem der Schacht-Abschnitt 11 in seinem Fußbereich 33 (siehe Fig. 1), also benachbart zu den Anschluß-Sockeln 7, 7', 7", mit einem Boden 34 verschlossen ist.

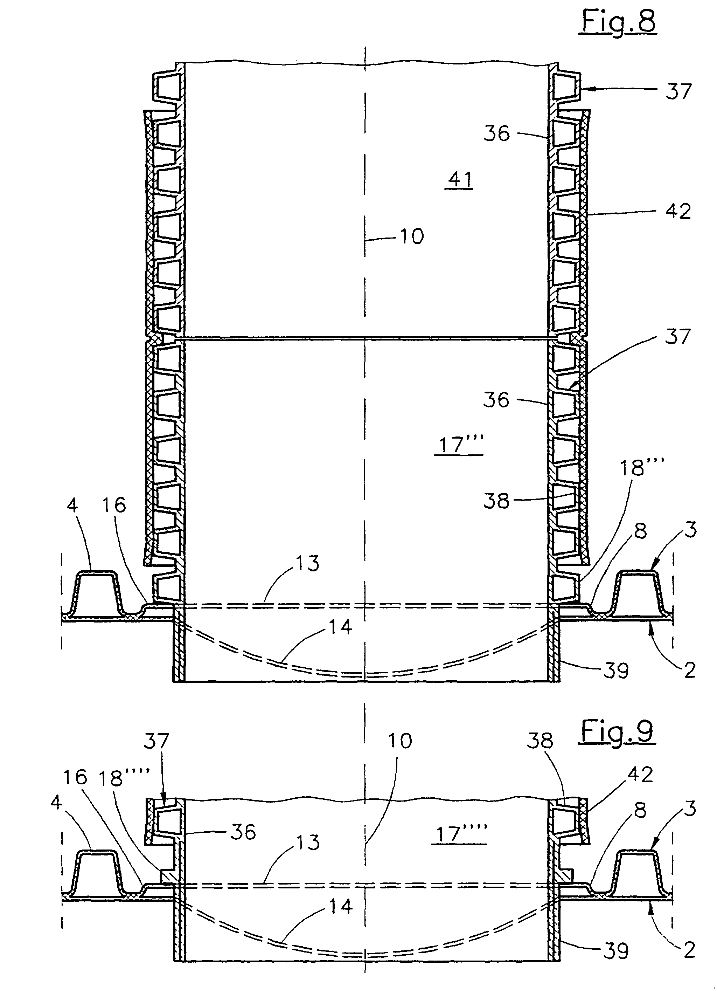

In Fig. 7 ist eine Ausführungsform dargestellt, bei der der Anschlag-Ring 18" keine Ausnehmung für eine Dichtung aufweist. Weiterhin sind auch keine Verriegelungs-Vorsprünge 24 vorgesehen. Vielmehr wird der Anschlag-Ring 18" an seiner der Außenseite 20 des Ringflansches 16 zugewandten Ringfläche 35 mit der Außenseite 20 des Ringflansches 16 verschweißt, wozu naturgemäß das Verbundrohr 1 einerseits und der Anschluß-Stutzen 17" andererseits aus einem schweißbaren Kunststoff bestehen müssen. Die Verschweißung kann nach dem sogenannten Spiegel-Schweißverfahren erfolgen, d.h. die Ringfläche 35 des Anschlag-Rings 18" und die Außenseite 20 des Ringflansches 16 werden gegen einen auf Schweißtemperatur befindlichen Ring gedrückt, wodurch der Kunststoff in diesem Bereich so weit erweicht wird, daß er schweißfähig wird. Nach dem Entfernen des Ringes werden die erwähnten Flächen aneinandergepreßt und kühlen ab. Insbesondere bei Einsatz von Polyolefinen als Material für das Verbundrohr 1 und den Anschluß-Stutzen 17" ist hiermit eine flüssigkeitsdichte Verbindung ohne weiteres herstellbar.

In Fig. 8 ist ein Anschlußstutzen 17''' dargestellt, der im wesentlichen aus einem Verbundrohr besteht, das aus einem glatten Innenrohr 36 und einem Außenrohr 37 gebildet ist, wobei das Außenrohr mit einer üblichen Wellung in Form von Well-Ringen 38 versehen ist. An einem in den Anschlußsockel 7 einzusetzenden Ende ist der Anschlußstutzen 17''' außen glattwandig ausgebildet, d.h. das Außenrohr 37 weist in diesem Bereich keine Wellung auf. Dieser glattwandige Zylinderabschnitt 39 wird in die Öffnungen 13, 14 des Anschlußsockels 7 bzw. 7' bzw. 7" eingeschoben, bis der sich unmittelbar an den Zylinderabschnitt 39 anschließende Well-Ring 38 als Anschlag-Ring 18''' gegen den Ringflansch 16 des Anschlußsockels 7 zur Anlage kommt. Die Abstützung erfolgt also auch hier gegen den Randsteg 8. Eine flüssigkeitsdichte Verbindung zwischen Anschlußsockel 7 und Anschlußstutzen 17''' kann in gleicher Weise erfolgen, wie bei der Ausführungsform nach Fig. 7. Außerdem kann ein Verkleben durchgeführt werden.

Die Ausgestaltung des Anschlußstutzens 17"" bei der Ausführungsform nach Fig. 9 entspricht der gemäß Fig. 8 mit dem Unterschied, daß ein Anschlag-Ring 18"", der am Ringflansch 16 zur Anlage kommt, durch einen auf dem Zylinderabschnitt 39 ausgebildeten Ringsteg 40 gebildet ist. Auch hierbei kann eine flüssigkeitsdichte Verbindung zwischen dem Anschluß-Stutzen 17'''' und dem Anschlußsockel 7 in gleicher Weise wie bei der Ausführungsform nach Fig. 7 bzw. 8 hergestellt werden.

Beide Anschlußstutzen 17''' und 17"" werden mit ihrem Zylinderabschnitt 39 und gegebenenfalls dem Ringsteg 40 auf einer Vorrichtung zur Herstellung von Kunststoff-Verbundrohren hergestellt, wie sie in ihrem grundsätzlichen Aufbau bekannt ist, und wie sie beispielsweise in der EP 0 563 575 B (entspr. US 5,320,797 bzw. JP Hei-5-71 877) bzw. in der EP 0 789 176 A (entspr. US Ser.No. 08/797 457 bzw. JP Hei-9-22 901) dargestellt und beschrieben ist. Die Anschluß-Stutzen 17''' bzw. 17"" werden im Zuge der Herstellung solcher Verbundrohre 41 hergestellt, die das gleiche Innenrohr 36 und Außenrohr 37 mit Well-Ringen 38 aufweisen, die - wie in Fig. 8 dargestellt - an die entsprechenden Anschluß-Stutzen 17''' bzw. 17"" angeschlossen werden sollen. Wie Fig. 8 entnehmbar ist, erfolgt dies in der üblichen Weise mittels einer Doppel-Steckmuffe 42; jede andere geeignete Art einer Muffenverbindung ist selbstverständlich auch möglich.

## Patentansprüche

1. Spül- und Kontroll-Schacht (32) für Flüssigkeitsleitungen, insbesondere Abwasser- und/oder Regenwasserleitungen,
- mit einem Schacht-Abschnitt (11), der
- - eine Mittel-Längsachse (5) aufweist,
- - als Verbundrohr (1) mit einem glatten, zylindrischen Innenrohr (2) und einem gewellten Außenrohr (3) ausgebildet ist,
- - mindestens eine Öffnung (13) im Außenrohr (3) und eine hiermit fluchtende Öffnung (14) im Innenrohr (2) aufweist, und
- - mit je einem in den miteinander fluchtenden Öffnungen (13, 14) angeordneten und mit dem Verbundrohr (1) verbundenen Anschlußstutzen (17, 17', 17", 17''', 17"") versehen ist, der eine Mittel-Achse (10) aufweist,
**dadurch gekennzeichnet,**
**daß** das Außenrohr (3) zu mindestens einem Anschluß-Sockel (7, 7', 7") mit einem zur Mittel-Achse (10) konzentrischen, die Öffnung (13) im Außenrohr (3) umgebenden, den Anschluß-Stutzen (17, 17', 17", 17''', 17"") aufnehmenden Randsteg (8) verformt ist.

2. Schacht nach Anspruch 1, **dadurch gekennzeichnet,**
**daß** der Anschluß-Stutzen (17, 17', 17", 17"', 17"") am Anschluß-Sockel (7, 7', 7") mindestens in einer Richtung der Mittel-Achse (10) festgelegt ist.

3. Schacht nach Anspruch 1 oder 2, **dadurch gekennzeichnet,**
**daß** der Anschluß-Sockel (7, 7', 7") einen konzentrisch zur Mittel-Achse (10) angeordneten, vom Randsteg (8) zur Mittel-Achse (10) vorspringenden, die Öffnung (13) im Außenrohr (3) begrenzenden Ringflansch (16) aufweist.

4. Schacht nach einem der Ansprüche 1 bis 3, **dadurch gekennzeichnet.**
**daß** der Anschluß-Stutzen (17, 17', 17", 17"', 17"") sich mit einem Anschlag-Ring (18, 18', 18", 18''', 18"") gegen das Verbundrohr (1) abstützt.

5. Schacht nach einem der Ansprüche 1 bis 4, **dadurch gekennzeichnet,**
**daß** der Anschluß-Stutzen (17, 17') mit dem Verbundrohr (1) verrastet ist.

6. Schacht nach Anspruch 4, **dadurch gekennzeichnet,**
**daß** der Anschlag-Ring (18, 18", 18"', 18"") sich gegen den Ringflansch (16) abstützt.

7. Schacht nach Anspruch 4, **dadurch gekennzeichnet,**
**daß** der Anschlag-Ring (18') sich gegen das Innenrohr (2) abstützt.

8. Schacht nach Anspruch 5, **dadurch gekennzeichnet,**
**daß** der Anschluß-Stutzen (17, 17') mit Verriegelungs-Vorsprüngen (24, 24') versehen ist.

9. Schacht nach Anspruch 1, **dadurch gekennzeichnet.**
**daß** der Anschluß-Stutzen (17", 17''', 17'''') mit dem Verbundrohr (1) verschweißt ist.

10. Schacht nach Anspruch 9, **dadurch gekennzeichnet,**
**daß** der Anschluß-Stutzen (17", 17''', 17'''') sich mit einem Anschlag-Ring (18'', 18''', 18"") gegen einen vom Randsteg (8) zur Mittel-Achse (10) vorspringenden, die Öffnung (13) im Außenrohr (3) begrenzenden Ringflansch (16) abstützt und mit diesem verschweißt ist.

11. Schacht nach Anspruch 4, **dadurch gekennzeichnet,**
**daß** der Anschlag-Ring (18, 18') eine Dichtung (21, 21') aufweist.

12. Schacht nach Anspruch 1, **dadurch gekennzeichnet,**
**daß** der Anschlußstutzen (17''', 17"") als Verbundrohr mit einem glattwandigen Innenrohr (36) und einem Außenrohr (37) mit Well-Ringen (38) gebildet ist, das einen außen glatten Zylinderabschnitt (39) aufweist, der in die miteinander fluchtenden Öffnungen (13, 14) eingesetzt ist.

13. Schacht nach Anspruch 12, **dadurch gekennzeichnet,**
**daß** benachbart zu dem Zylinderabschnitt (39) ein Well-Ring (38) als Anschlag-Ring (18"') ausgebildet ist, der sich gegen Randsteg (8) abstützt.

14. Schacht nach Anspruch 12, **dadurch gekennzeichnet,**
**daß** am Zylinderabschnitt (39) ein Ringsteg (40) als Anschlag-Ring (18"") ausgebildet ist, der sich gegen den Randsteg (8) abstützt.

15. Schacht-Abschnitt nach einem der Ansprüche 1 bis 14, für einen Spül- und Kontroll-Schacht **dadurch gekennzeichnet,**
**daß** der Anschluß-Sockel (7, 7', 7") eine einstückig mit dem Randsteg (8) ausgebildete Anschluß-Sockel-Platte (9) aufweist, in die die Öffnung (13) im Außenrohr (3) geschnitten ist.

## Claims

1. A drain and inspection manhole (32) for liquid conduits, in particular waste water and/or storm water drains, comprising
- a manhole section (11),
-- which has a central longitudinal axis (5),
-- which is formed as a composite pipe (1) having a smooth cylindrical internal pipe (2) and a corrugated external pipe (3),
-- which has at least one aperture (13) in the external pipe (3) and an aperture (14), flush therewith, in the internal pipe (2), and
-- which is equipped with a connector (17, 17', 17", 17"', 17"") which is disposed in the aligning apertures (13, 14) and joined to the composite pipe (1) and which has a central axis (10),
**characterized in that**
the external pipe (3) is deformed to comprise at least one connecting base (7, 7', 7") with a marginal web (8) which is concentric of the central axis (10), which encircles the aperture (13) in the external pipe (3) and which accommodates the connector (17, 17', 17", 17"', 17"").

2. A manhole according to claim 1, **characterized in that**
the connector (17, 17', 17", 17"', 17"") is fixed on the connecting base (7, 7', 7") at least in one direction of the central axis (10).

3. A manhole according to claim 1 or 2, **characterized in that**
the connecting base (7, 7', 7") comprises an annular flange (16) which is concentric of the central axis (10) and stands out from the marginal web (8) towards the central axis (10) and defines the aperture (13) in the external pipe (3).

4. A manhole according to one of claims 1 to 3, **characterized in that**
the connector (17, 17', 17", 17"', 17"") supports itself on the composite pipe (1) by means of a stop ring (18, 18', 18", 18"', 18"").

5. A manhole according to one of claims 1 to 4, **characterized in that**
the connector (17, 17') is in locking engagement with the composite pipe (1).

6. A manhole according to claim 4, **characterized in that**
the stop ring (18, 18", 18"', 18"") supports itself on the annular flange (16).

7. A manhole according to claim 4, **characterized in that**
the stop ring (18') supports itself on the internal pipe (2).

8. A manhole according to claim 5, **characterized in that**
the connector (17, 17') is provided with locking projections (24, 24').

9. A manhole according to claim 1, **characterized in that**
the connector (17", 17"', 17"") is joined to the composite pipe (1) by welding.

10. A manhole according to claim 9, **characterized in that**
the connector (17". 17"', 17""), by means of a stop ring (18", 18"', 18""), supports itself on an annular flange (16) and is joined thereto by welding, the annular flange (16) standing out from the marginal web (8) towards the central axis (10) and defining the aperture (13) in the external pipe (3).

11. A manhole according to claim 4, **characterized in that**
the stop ring (18, 18') comprises a seal (21, 21').

12. A manhole according to claim 1, **characterized in that**
the connector (17"', 17"") is a composite pipe having a smooth internal pipe (36) and an external pipe (37) which is provided with corrugation rings (38) and has an externally smooth cylindrical section (39) which is inserted into the aligning apertures (13, 14).

13. A manhole according to claim 12, **characterized in that**
in vicinity to the cylindrical section (39), a corrugation ring (38) is formed as a stop ring (18"') which supports itself on the marginal web (8).

14. A manhole according to claim 12, **characterized in that**
an annular web (40) is formed as a stop ring (18"") on the cylindrical section (39), supporting itself on the marginal web (8).

15. A manhole section according to one of claims 1 to 14 for a drain and inspection manhole, **characterized in that**
the connecting base (7, 7', 7") comprises a plate (9) which is formed in a single piece with the marginal web (8) and into which the opening (13) in the external pipe (3) is cut.

## Revendications

1. Puits de rinçage et d'inspection (32) pour des conduites de liquides, notamment des conduites d'eaux usées et/ou d'eaux pluviales,
- comprenant une portion de puits (11), qui
- - présente un axe longitudinal central (5),
- - est configurée comme tube d'assemblage (1) avec un tube intérieur (2) lisse cylindrique et un tube extérieur (3) ondulé,
- - présente au moins une ouverture (13) dans le tube extérieur (3) et une ouverture (14) dans le tube intérieur (2) alignée sur la première, et
- - est munie d'un raccord (17, 17', 17" , 17"', 17"") respectif présentant un axe central (10) disposé dans les ouvertures (13, 14) alignées l'une sur l'autre et relié au tube d'assemblage (1),
où
le tube extérieur (3) est déformé en au moins un socle de raccordement (7, 7', 7") avec une nervure périphérique (8) concentrique par rapport à l'axe central (10), entourant l'ouverture (13) dans le tube extérieur (3) et recevant le raccord (17, 17', 17", 17"', 17'''').

2. Puits selon la revendication 1, où
le raccord (17, 17', 17'', 17''', 17'''') est fixé au socle de raccordement (7, 7', 7") au moins dans un sens de l'axe central (10).

3. Puits selon la revendication 1 ou 2, où
le socle de raccordement (7, 7', 7") présente une bride annulaire (16) disposée de manière concentrique par rapport à l'axe central (10), saillant depuis la nervure périphérique (8) du socle de raccordement vers l'axe (10) et délimitant l'ouverture (13) dans le tube extérieur (3).

4. Puits selon l'une des revendications 1 à 3, où
le raccord (17, 17', 17'', 17''', 17'''') s'appuie avec une bague de butée (18, 18', 18", 18"', 18"") contre le tube d'assemblage (1).

5. Puits selon l'une des revendications 1 à 4, où
le raccord (17, 17') est emboîté dans le tube d'assemblage (1).

6. Puits selon la revendication 4, où
la bague de butée (18, 18', 18", 18''', 18'''') s'appuie contre la bride annulaire (16).

7. Puits selon la revendication 4, où
la bague de butée (18') s'appuie contre le tube intérieur (2).

8. Puits selon la revendication 5, où
le raccord (17, 17') est muni de saillies de verrouillage (24, 24').

9. Puits selon la revendication 1, où
le raccord (17'', 17''', 17'''') est soudé avec le tube d'assemblage (1).

10. Puits selon la revendication 9, où
le raccord (17'', 17''', 17'''') s'appuie avec une bague de butée (18", 18"', 18"') contre une bride annulaire (16) et est soudée à celle-ci, bride saillant de la nervure périphérique (8) vers l'axe central (10) et délimitant les ouvertures (13) dans le tube extérieur (3).

11. Puits selon la revendication 4, où
la bague de butée (18, 18') présente un joint d'étanchéité (21, 21').

12. Puits selon la revendication 1, où
le raccord (17''', 17'''') est configuré comme tube d'assemblage avec un tube intérieur (36) à parois lisses et un tube extérieur (37) avec des ondulations (38), qui présente une portion cylindrique (39) extérieurement lisse, qui est insérée dans les ouvertures (13, 14) alignées l'une sur l'autre.

13. Puits selon la revendication 12, où
au voisinage de la portion cylindrique (39) une ondulation (38) est configurée comme bague de butée (18"') qui s'appuie contre la nervure périphérique (8).

14. Puits selon la revendication 12, où
sur la portion cylindrique (39) une nervure annulaire (40) est configurée comme bague de butée (18"") qui s'appuie contre la nervure périphérique (8).

15. Portion de puits selon l'une des revendications 1 à 14 pour un puits de rinçage et d'inspection, **caractérisée en ce**
**que** le socle de raccordement (7, 7', 7") présente une plaque de socle de raccordement (9) solidaire de la nervure périphérique (8), dans laquelle l'ouverture (13) dans le tube extérieur (3) est découpée.
